# EUROPÄISCHE PATENTSCHRIFT

(11) **EP 0 549 603 B1**
(45) Veröffentlichungstag und Bekanntmachung des Hinweises auf die Patenterteilung: **29.06.1994**
(21) Anmeldenummer: 91914778.5
(22) Anmeldetag: 21.08.1991
(51) Int. Cl.: A47L 15/42, D06F 39/08, G05D 9/00

(54) **SICHERHEITSVORRICHTUNG FÜR WASSERFÜHRENDE HAUSHALTGERÄTE**
SAFETY DEVICE FOR DOMESTIC APPLIANCES THROUGH WHICH WATER FLOWS
DISPOSITIF DE SECURITE POUR APPAREILS DOMESTIQUES A CIRCULATION D'EAU

(30) Priorität: 18.09.1990 DE 4029543
(43) Veröffentlichungstag der Anmeldung: 07.07.1993
(73) Patentinhaber: Bosch-Siemens Hausgeräte GmbH, 81669 München (DE)
(72) Erfinder: STICKEL, Ernst, D-7928 Giengen (DE); EIERMANN, Rüdiger, D-8889 Staufen (DE); JERG, Helmut, D-7928 Giengen (DE)
(86) Internationale Anmeldenummer: EP9101592
(87) Internationale Veröffentlichungsnummer: WO9204855

(56) Entgegenhaltungen:
- DE-A- 3 003 440
- DE-A- 3 425 663
- FR-A- 1 591 008
- FR-A- 2 202 285
- GB-A- 2 067 891
- GB-A- 2 166 645

## Beschreibung

Die Erfindung betrifft eine Sicherheitsvorrichtung für wasserführende Haushaltgeräte nach dem Oberbegriff des Patentanspruches 1.

Aus dem DE-GM 72 47 582 ist eine Sicherheitsvorrichtung für wasserführende Haushaltgeräte bekannt, die einen Flüssigkeitsbehälter, eine Einfüllsteuerung, ein von einem Programmsteuergerät öffenbares und von der Einfüllsteuerung und/oder dem Programmsteuergerät schließbares Zulaufventil, eine Entleerungspumpe und eine Sicherheitsniveauschalteinrichtung aufweist, bei der ein Schwimmer in einer flüssigkeitsleitend mit dem Flüssigkeitsbehälter verbundenen Kammer mit einer Öffnung zum Wassereintritt angeordnet ist und in Schaltlage auf einen Schalter wirkt, der in Schaltlage die Entleerungspumpe einschaltet und gegebenenfalls das Zulaufventil schließt.

Bei wasserführenden Haushaltgeräten kommt es z.B. durch Lufteinschlüsse in der Entleerungspumpe vor, daß nicht die gesamte eingefüllte Wassermenge eines zu beendenden Programmabschnittes abgepumpt wird, da diese Entleerungspumpen üblicherweise nicht selbstansaugend sind und daher Luft nur in geringem Maße fördern können. Bei der Sicherheitsvorrichtung nach dem DE-GM 72 47 582 verharrt der Schalter in der Schaltlage. Das hat in dem geschilderten Fehlerfall den Nachteil, daß der Flüssigkeitsbehälter des wasserführenden Haushaltgerätes während eines laufenden Programmes vollständig entleert wird, was bei einem Programmabschnitt mit Aufheizen des Wassers aufgrund Ansprechen der üblicherweise vorhandenen Temperaturfühler zum Schutze der Heizung gegen Überhitzen zum Stillstand des Haushaltgerätes führt oder aber bei Programmabschnitten ohne derartige Schutzüberwachungen zumindestens das Arbeitsergebnis wesentlich verschlechtert und zu einem hohen Wasserverbrauch führt. Ein ordnungsgemäßer Programmablauf kann erst wieder nach einem Eingriff in das wasserführende Haushaltgerät z.B. durch den vom Benutzer gerufenen Kundendienst erfolgen. Weiterhin ist bei dem DE-GM 72 47 582 die Kammer direkt an den Flüssigkeitsbehälter angebaut, wobei durch eine in der Höhe zwischen dem Normalfüllstand und dem Warnfüllstand angeordnete Öffnung zum Flüssigkeitseintritt der Füllstand, bei dem der in der Kammer angeordnete Schwimmer aufschwimmen und den Schalter betätigen soll, vorbestimmt ist. Die während des Programmablaufes zwangsläufig stark bewegte Wasseroberfläche führt zu einem Wassereintritt in die Kammer ohne daß ein Sicherheitsfall vorliegt und verursacht damit ein unnötiges Einschalten der Entleerungspumpe und zu den damit verbundenen, vorbeschriebenen Programmablaufstörung und zu einem erhöhten Wasserverbrauch.

Aus der DE-P 39 49 168 ist eine Einfüllsteuerung eines Flüssigkeitsbehälters bekannt, die eine ein Füllniveau begrenzende Überlaufkante aufweist, die zu einem Überlaufkanal führt, an dem eine auf einen außerhalb des Überlaufkanals angeordneten Schalter wirkende Membrane angeordnet ist und der Schalter in Schaltlage ein Zulaufventil schließt, wobei in dem ständig entleerten Überlaufkanal in Strömungsrichtung nach der mit einem Abstand von der Überlaufkante angebrachten Membrane ein Strömungswiderstand angeordnet ist. Bei dieser Anordnung ist bei einem Defekt der Einfüllsteuerung keine Sicherheit mehr gegen Überlaufen des wasserführenden Haushaltgerätes gegeben.

Aufgabe der Erfindung ist es, eine Sicherheitsvorrichtung für wasserführende Haushaltgeräte zu schaffen, bei der ein unnötiges Einschalten der Entleerungspumpe und im Fehlerfalle ein vollständiges Entleeren des wasserführenden Haushaltgeräts und damit unnötiger Wasserverbrauch sowie zusätzliche Maßnahmen z.B. durch den Kundendienst vermieden wird.

Diese Aufgabe wird dadurch gelöst, daß der Schwimmer in Ruhelage in geringem Abstand über dem statischen Niveau der Füllung des Flüssigkeitsbehälters gehalten wird und der vom Schwimmer beaufschlagte Schalter bei Erreichen der Ruhelage die Entleerungspumpe abschaltet.

Durch die Anordnung des Schwimmers in einem geringen Abstand über dem statischen Niveau wird ein unnötiges Einschalten der Entleerungspumpe durch die stark bewegte Wasseroberfläche vermieden. Durch das Wiederabschalten der Entleerungspumpe wird verhindert, daß eine Programmablaufstörung oder unzureichende Funktion des Programmabschnittes sowie unnötiger Wasserverbrauch aufgrund einer Überfüllung des Flüssigkeitsbehälters bewirkt wird, da spätestens bei Erreichen des statischen Niveaus das Entleeren beendet wird. Das laufende Programm wird ohne zusätzlichen Aufwand weitergeführt, ohne daß der Benutzer die vorgeschilderten seltenen Fehlerfälle bemerkt und ohne daß zusätzliche Maßnahmen, wie z.B. Eingriff in das Haushaltgerät durch den Kundendienst, notwendig werden.

Nach einer besonders bevorzugten Ausführungsform der Erfindung schaltet der vom Schwimmer beaufschlagte Schalter bei Erreichen der Ruhelage nach der vorhergehenden Einnahme der Schaltlage die Entleerungspumpe ab und daraufhin wird das Zulaufventil geschlossen gehalten. Mit dieser Maßnahme wird die Ausführung dahingehend verbessert, daß auch bei ev. Schwankungen des statischen Niveaus das Zulaufventil nicht periodisch wieder geöffnet und geschlossen wird.

Nach einer vorteilhaften Ausführungsform der Erfindung liegt der Schwimmer in Ruhelage auf einer am Boden der Kammer angeordneten Auflage auf. Damit wird gewährleistet, daß das Wasser bei entsprechend hohem Niveau im Flüssigkeitsbehälter in die Kammer eintreten kann, ohne daß dadurch der Schwimmer schon angehoben wird. Weiterhin wird eine sehr genaue Anordnung der Öffnung nicht notwendig, da der Öffnungsrand nicht mehr das Schaltniveau des Schwimmers bestimmt.

Nach einer bevorzugten Ausführungsform der Erfindung liegt der Schwimmer in Ruhelage auf einer Drei-Punkt-Auflage auf, womit ein Festsitzen des Schwimmers z.B. durch Verkalken etc. verhindert und ein sicheres Anheben des Schwimmers dadurch gewährleistet wird, daß das Wasser unter den Schwimmer gelangen kann.

Zur Vermeidung unnötiger Öffnungen im Flüssigkeitsbehälter und zur besseren Verhinderung des unnötigen Eintritts von Wasser in die Kammer ist nach einer weiteren vorteilhaften Ausführungsform der Erfindung die den Schwimmer beinhaltende Kammer räumlich getrennt von dem Flüssigkeitsbehälter angeordnet.

Nach einem bevorzugten Merkmal der Erfindung steht die den Schwimmer beinhaltende Kammer in flüssigkeitsführender Verbindung mit einem Überlaufkanal des wasserführenden Haushaltgeräts, in dem in Strömungsrichtung nach einer Öffnung der Kammer zum Wassereintritt ein Strömungswiderstand angeordnet ist. Bei einem Defekt der Einfüllsteuerung kommt es zu einem ständigen Überlaufen von Wasser in den Überlaufkanal. Durch den Strömungswiderstand nach der Öffnung der Kammer der Sicherheitsniveauschalteinrichtung ist gewährleistet, daß sich sofort eine Wassersäule aufbaut, was aufgrund der flüssigkeitsführenden Verbindung der Kammer mit dem Überlaufkanal zum sicheren Eintreten des Wassers aus dem Überlaufkanal in die Kammmer führt. Damit kann mittels der Sicherheitsniveauschalteinrichtung die Funktion der Einfüllsteuerung des wasserführenden Haushaltgerätes überwacht und der Wasseraustritt aus dem wasserführenden Haushaltgerät vermieden werden.

Weiter verbessert wird der Schutz gegen unnötigen Wassereintritt durch Schwallwasser aus der stark bewegten Wasseroberfläche in die Kammer vorteilhafterweise dadurch, daß die Öffnung der Kammer durch eine Blende geschützt ist.

Nach einem weiteren bevorzugten Merkmal der Erfindung ist die Blende eine im Abstand zu der Öffnung der Kammer und zu deren Ebene parallel angeordnete Wand, deren in Strömungsrichtung unteres Ende in einem Abstand über der Wandung der Verbindungsleitung zum Flüssigkeitsbehälter endet und dadurch den Strömungswiderstand bildet. Damit ist der Schutz vor Schwallwasser und die Anordnung eines Strömungswiderstandes zweckmäßig und konstruktiv einfach gelöst.

Es sind wasserführende Haushaltgeräte bekannt, bei denen das einzufüllende Wasser vom Zulaufventil in einen Einfüllbehälter geführt wird, in dem die einlaufende Wassermenge bestimmt und dosiert wird und dann gesteuert vom Programmsteuergerät zum Flüssigkeitsbehälter geleitet wird. Bei derartigen Haushaltgeräten steht nach einem bevorzugten Merkmal der Erfindung die Kammer in flüssigkeitsführender Verbindung mit dem Einfüllbehälter des wasserführenden Haushaltgeräts, wodurch auch das Niveau des in den Einfüllbehälter einlaufenden Wassers durch die Sicherheitsniveauschalteinrichtung gesteuert werden kann.

Nach einem weiteren Merkmal der Erfindung steht die Kammer in flüssigkeitsführender Verbindung mit einem Überlaufkanal des Einfüllbehälters des wasserführenden Haushaltgeräts in dem in Strömungsrichtung nach der Öffnung der Kammer zum Wassereintritt der Strömungswiderstand angeordnet ist, wodurch wie schon oben beschrieben bei Ausfall der Einfüllsteuerung des Einfüllbehälter die Sicherheitsniveauschalteinrichtung eine zusätzliche Sicherungsfunktion gegen Überlaufen des Haushaltgerätes übernehmen kann.

Zweckmäßigerweise ist die Kammer in dem Einfüllbehälter des wasserführenden Haushaltgeräts angeordnet.

Nach einer vorteilhaften Ausführungsform der Erfindung ist die Kammer in dem Einfüllbehälter einstückig eingeformt. Damit werden zusätzlich benötigte und zu montierende Teile vermieden.

Die Erfindung wird nachstehend anhand in der Zeichnung dargestellter Ausführungsbeispiele näher erläutert.

Es zeigt
- Figur 1: einen Schnitt durch einen Einfüllbehälter eines wasserführenden Haushaltgerätes mit der erfindungsgemäßen Sicherheitsvorrichtung,
- Figur 2: einen Auszug aus einem elektrischen Schaltplan eines wasserführenden Haushaltgerätes in einer Ausführungsform der Erfindung und
- Figur 3: einen Auszug aus einem elektrischen Schaltplan eines wasserführenden Haushaltgerätes in einer weiteren Ausführungsform der Erfindung, bei der ein Zulaufventil nach Abschaltung der Entleerungspumpe geschlossen gehalten wird.

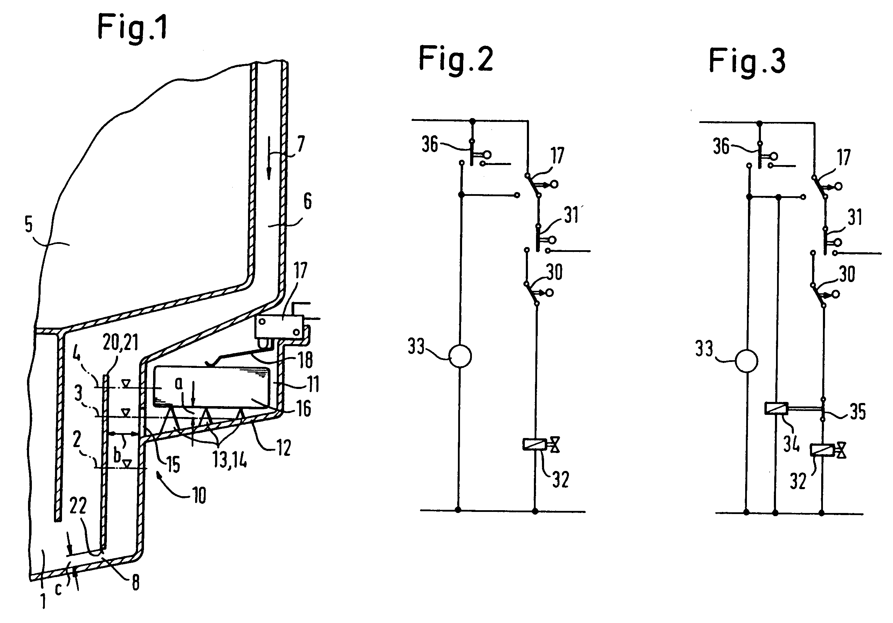

In einem wasserführenden Haushaltgerät, mit einem nicht gezeigten Flüssigkeitsbehälter, einer Einfüllsteuerung, deren z.B. schwimmergesteuerter Schalter in Figur 2 und 3 als 30 bezeichnet ist, einem von einem nicht dargestellten Programmsteuergerät durch dessen Kontakt 31 öffenbares und von der Einfüllsteuerung und/oder dem Programmsteuergerät schließbares Zulaufventil 32 (Figur 2 und 3), einer Entleerungspumpe 33 (Figur 2 und 3) ist eine Sicherheitsniveauschalteinrichtung 10 vorgesehen, bei der ein Schwimmer 16 in einer über eine Verbindungsleitung 1 flüssigkeitsleitend mit dem Flüssigkeitsbehälter verbundenen Kammer 11 angeordnet ist und auf einen Schalter 17 wirkt. Der Schwimmer 16 wird in Ruhelage in einem geringem Abstand a über dem statischen Niveau 3 der Füllung des Flüssigkeitsbehälters dadurch gehalten, daß er in Ruhelage auf einer am Boden 12 der Kammer 11 angeordneten Auflage 13, die als eine Drei-Punkt-Auflage 14 ausgebildet ist, aufliegt. Der Kontakt des Programmsteuergerätes zum Schalten der Entleerungspumpe 33 im üblichen Programmablauf ist mit 36 bezeichnet (Figur 2 und 3).

Die den Schwimmer 16 beinhaltende Kammer 11 ist räumlich getrennt von dem Flüssigkeitsbehälter angeordnet, wobei eine Öffnung 15 der Kammer 11 zum Wassereintritt durch eine, als eine im Abstand b zu der Öffnung 15 der Kammer 11 und zu deren Ebene parallel angeordnete Wand 21 ausgebildete Blende 20 geschützt ist, deren in Strömungsrichtung 7 unteres Ende 22 in einem Abstand c über der Wandung der Verbindungsleitung 1 zum Flüssigkeitsbehälter endet und dadurch einen nach der Öffnung 15 der Kammer 11 angeordneten Strömungswiderstand 8 bildet.

In der in Figur 1 dargestellten Ausführungsform der Erfindung ist die Kammer 11 in einem Einfüllbehälter 5 des wasserführenden Haushaltgeräts einstückig eingeformt und steht in flüssigkeitsführender Verbindung mit dessen Überlaufkanal 6.

Der vom Schwimmer 16 beaufschlagte Schalter 17 ist, wie in Figur 2 gezeigt, in den Stromkreislauf der Entleerungspumpe 33 und des Zulaufventils 32 so eingefügt, daß er in Schaltlage die Entleerungspumpe 33 einschaltet und das Zulaufventil 32 schließt und bei Erreichen der Ruhelage die Entleerungspumpe 33 abschaltet.

Zusätzlich zu dieser Anordnung kann, wie in Figur 3 gezeigt, durch die Anordnung eines bistabilen Relais 34, das auf einen Schalter 35 wirkt, das Zulaufventil 32 nach Abschalten der Entleerungspumpe 33 geschlossen gehalten werden.

In dem Flüssigkeitsbehälter des wasserführenden Haushaltgerätes treten üblicherweise zwei unterschiedliche Normalwasserstände auf. Das eingefüllte Wasser nimmt, wenn es nicht umgewälzt oder bewegt wird, einen höheren Wasserstand - das mit 3 bezeichnete statische Niveau - und bei Bewegung bzw. Umwälzung in dem Haushaltgerät einen niedrigeren Wasserstand - das mit 2 bezeichnete dynamische Niveau - ein. Beide Normalwasserstände führen nicht zu der Auslösung der Sicherheitsniveauschalteinrichtung 10, obwohl das Wasser zumindest bei Erreichen des statischen Niveaus 3 schon in die Kammer 11 eingetreten ist. Übersteigt der Wasserstand das statische Niveau 3, z.B. dadurch, daß die Entleerungspumpe 33 die Wasserfüllung im Flüssigkeitsbehälter beim vorhergehenden Programmabschnitt nicht vollständig abgepumpt hat und nun über das Zulaufventil 32 und die Einfüllsteuerung die programmgemäß vorgesehene Wassermenge eingefüllt wird, so bringt das Wasser, wenn es über ein mit 4 bezeichnetes Sicherheitsniveau ansteigt, den Schwimmer 16 aus der Ruhelage zum Aufschwimmen. Damit befindet sich der Schwimmer nun in der Schaltlage und betätigt den Schalter 17 über dessen Hebel 18, der auf dem Schwimmer 16 in Richtung auf den Schwimmer 16 federnd vorgespannt aufliegt, entgegen der Federkraft des Hebels 18. Der Schalter 17 schaltet nun die Entleerungspumpe 33 ein und schließt, falls das Einfüllen noch im Gange ist, das Zulaufventil 32. Mit dem Absinken des Wasserstandes bis zum statischen Niveau 3 und auch aufgrund der Federkraft des Hebels 18 senkt sich auch der Schwimmer 17, bis er wieder in Ruhelage auf der Drei-Punkt-Auflage 14 aufliegt. Dabei wird der Schalter 17 ebenfalls in Ruhelage gebracht, wodurch die Entleerungspumpe 33 wieder abgeschaltet und damit der Teilentleerungsvorgang beendet wird.

Mit der erfindungsgemäßen Sicherheitsvorrichtung kann auch die Einfüllsteuerung überprüft werden. Bei Ausfall oder Störung der Einfüllsteuerung, die üblicherweise das Schließen des Zulaufventils 32 bewirken sollte, übersteigt das Wasser im gezeigten Ausführungsbeispiel im Einfüllbehälter 5, aber auch in der nicht gezeigten Ausführungsform der Erfindung ohne Einfüllbehälter im Flüssigkeitsbehälter, eine üblicherweise vorgesehene, nicht dargestellte Überlaufkante, von der das Wasser in den Überlaufkanal 6 geleitet wird. Aufgrund des nach der Öffnung 15 der Kammer 11 angeordneten Strömungswiderstands 8 bildet das übergelaufene Wasser vor dem Strömungswiderstand 8 sofort eine Flüssigkeitssäule und gelangt in die Kammer 11, wo der vorbeschriebenen Schaltvorgang ausgelöst wird, wobei auch das Zulaufventil 32 geschlossen wird. Da in diesem Fehlerfall der Fehler nicht unbemerkt bleiben soll, wird der größte Teil des übergelaufenen Wassers an eine Stelle im Haushaltgerät geleitet, an der der Benutzer durch Auftreten von Wasser auf eine Fehlfunktion des Haushaltgerätes hingewiesen wird.

## Patentansprüche

1. Sicherheitsvorrichtung für wasserführende Haushaltgeräte, mit einem Flüssigkeitsbehälter, einer Einfüllsteuerung, einem von einem Programmsteuergerät öffenbaren und von der Einfüllsteuerung und/oder dem Programmsteuergerät schließbaren Zulaufventil (32), einer Entleerungspumpe (33) und einer Sicherheitsniveauschalteinrichtung (10), bei der ein Schwimmer (16) in einer flüssigkeitsleitend mit dem Flüssigkeitsbehälter verbundenen Kammer (11) mit einer Öffnung (15) zum Wassereintritt angeordnet ist und in Schaltlage auf einen Schalter (17) wirkt, der in Schaltlage die Entleerungspumpe (31) einschaltet und gegebenenfalls das Zulaufventil (32) schließt,
**dadurch gekennzeichnet**,
daß der Schwimmer (16) in Ruhelage in geringem Abstand (a) über dem statischen Niveau (3) der Füllung des Flüssigkeitsbehälters gehalten wird und daß der vom Schwimmer (16) beaufschlagte Schalter (17) bei Erreichen der Ruhelage die Entleerungspumpe (33) abschaltet.

2. Sicherheitsvorrichtung nach Anspruch 1, dadurch gekennzeichnet, daß der vom Schwimmer (16) beaufschlagte Schalter (17) bei Erreichen der Ruhelage nach der vorhergehenden Einnahme der Schaltlage die Entleerungspumpe (33) abschaltet und daß daraufhin das Zulaufventil (32) geschlossen gehalten wird.

3. Sicherheitsvorrichtung nach Anspruch 1 oder 2, dadurch gekennzeichnet, daß der Schwimmer (16) in Ruhelage auf einer am Boden (12) der Kammer (11) angeordneten Auflage (13) aufliegt.

4. Sicherheitsvorrichtung nach einem der Ansprüche 1 bis 3, dadurch gekennzeichnet, daß der Schwimmer (16) in Ruhelage auf einer Drei-Punkt-Auflage (14) aufliegt.

5. Sicherheitsvorrichtung nach einem der Ansprüche 1 bis 4, dadurch gekennzeichnet, daß die den Schwimmer (16) beinhaltende Kammer (11) räumlich getrennt von dem Flüssigkeitsbehälter angeordnet ist.

6. Sicherheitsvorrichtung nach einem der Ansprüche 1 bis 5, dadurch gekennzeichnet, daß die den Schwimmer (16) beinhaltende Kammer (11) in flüssigkeitsführender Verbindung mit einem Überlaufkanal (6) des wasserführenden Haushaltgeräts steht, in dem in Strömungsrichtung (7) nach einer Öffnung (15) der Kammer (11) zum Wassereintritt ein Strömungswiderstand (8) angeordnet ist.

7. Sicherheitsvorrichtung nach einem der Ansprüche 1 bis 6, dadurch gekennzeichnet, daß die Öffnung (15) zum Wassereintritt durch eine Blende (20) geschützt ist.

8. Sicherheitsvorrichtung nach einem der Ansprüche 1 bis 7, dadurch gekennzeichnet, daß die Blende (20) eine im Abstand zu der Öffnung (15) der Kammer (11) und zu deren Ebene parallel angeordnete Wand (21) ist, deren in Strömungsrichtung (7) unteres Ende (22) in einem Abstand (c) über der Wandung der Verbindungsleitung (1) zum Flüssigkeitsbehälter endet und dadurch den Strömungswiderstand (8) bildet.

9. Sicherheitsvorrichtung nach einem der Ansprüche 1 bis 8, dadurch gekennzeichnet, daß die Kammer (11) in flüssigkeitsführender Verbindung mit einem Einfüllbehälter (5) des wasserführenden Haushaltgeräts steht.

10. Sicherheitsvorrichtung nach einem der Ansprüche 1 bis 9, dadurch gekennzeichnet, daß die Kammer (11) in flüssigkeitsführender Verbindung mit dem Überlaufkanal (5) des Einfüllbehälters (5) des wasserführenden Haushaltgeräts steht, in dem in Strömungsrichtung (7) nach der Öffnung (15) der Kammer (11) zum Wassereintritt der Strömungswiderstand (8) angeordnet ist.

11. Sicherheitsvorrichtung nach einem der Ansprüche 1 bis 10, dadurch gekennzeichnet, daß die Kammer (11) in dem Einfüllbehälter (5) des wasserführenden Haushaltgeräts angeordnet ist.

12. Sicherheitsvorrichtung nach Anspruch 11, dadurch gekennzeichnet, daß die Kammer (11) in dem Einfüllbehälter (5) einstükkig eingeformt ist.

## Claims

1. Safety device for water-carrying household appliances, with a liquid container, a filling control, an inflow valve (32), which is openable by a program control device and closable by the filling control and/or the program control device, an emptying pump (33) and a safety surface level switch-off equipment (10), in which a float (16) is arranged in a chamber (11), which is connected in liquid-conducting manner with the liquid container, with an opening (15) to the water entry and which in switching position acts on a switch (17), which in switching position switches the emptying pump (33) on and in a given case closes the inflow valve (32), characterised thereby, that the float (16) in rest position is retained at a small spacing (a) above the static surface level (3) of the filling of the liquid container and that the switch (17) acted on by the float (16) on reaching the rest positon switches the emptying pump (33) off.

2. Safety device according to claim 1, characterised thereby, that the switch (17) acted on by the float (16) on reaching the rest position after the preceding assumption of the switching positon switches the emptying pump (33) off and that the inflow valve (32) is thereupon kept closed.

3. Safety device according to claim 1 or 2, characterised thereby, that the float (16) in the rest position lies on a support (13) arranged at the base (12) of the chamber (11).

4. Safety device according to one of the claims 1 to 3, characterised thereby, that the float (16) in the rest position lies on a three-point support (14).

5. Safety device according to one of the claims claims 1 to 4, characterised thereby, that the chamber (11) containing the float (16) is arranged spatially separate from the liquid container.

6. Safety device according to one of the claims 1 to 5, characterised thereby, that the chamber (11) containing the float (16) stands in liquid-conducting connection with an overflow channel (6) of the water-carrying household appliance, in which a flow resistance (8) to entry of water is arranged in flow direction (7) behind an opening (15) of the chamber (11).

7. Safety device according to one of the claims 1 to 6, characterised thereby, that the opening (15) to the entry of water is protected by a shield (20).

8. Safety device according to one of the claims 1 to 7, characterised thereby, that the shield (20) is a wall (21), which is arranged at a spacing from the opening (15) of the chamber (11) and parallelly to its plane and that end (22) of which, which is lower in flow direction (7), ends at a spacing (c) above the wall of the connecting duct (1) to the liquid container and thereby forms the flow resistance (8).

9. Safety device according to one of the claims 1 to 8, characterised thereby, that the chamber (11) stands in liquid-conducting connection with a filling container (5) of the water-carrying household appliance.

10. Safety device according to one of the claims 1 to 9, characterised thereby, that the chamber (11) stands in liquid-conducting connection with the overflow channel (6) of the filling container (5) of the water-carrying household appliance, in which the flow resistance (8) to entry of water is arranged in flow direction (7) behind the opening (15) of the chamber (11).

11. Safety device according to one of the claims 1 to 10, characterised thereby, that the chamber (11) is arranged in the filling container (5) of the water-carrying household appliance.

12. Safety device according to one of the claims 1 to 11, characterised thereby, that the chamber (11) is moulded integrally in the filling container (5).

## Revendications

1. Dispositif de sécurité pour des appareils ménagers utilisant de l'eau, comprenant un réservoir de liquide, une commande de remplissage, une vanne d'admission (32) ouvrant sous l'action d'un programmateur et fermant sous l'action de la commande de remplissage et/ou du programmateur, une pompe de vidange (33) et un dispositif de contact de niveau de sécurité (10), dans lequel un flotteur (16) est disposé dans une chambre (11) communiquant du point de vue liquide avec le réservoir de liquide et présentant une ouverture (15) pour l'entrée d'eau, et agit en position de contact sur un interrupteur (17) qui, en position de contact, branche la pompe de vidange (31) et, le cas échéant, ferme la vanne d'admission (32), **caractérisé** par le fait que le flotteur (16), en position de repos, est maintenu à faible distance (a) au-dessus du niveau statique (3) du contenu du réservoir de liquide et que l'interrupteur (17) actionné par le flotteur (16) débranche la pompe de vidange (33) en atteignant la position de repos.

2. Dispositif de sécurité suivant la revendication 1, **caractérisé** par le fait que l'interrupteur (17) sur lequel agit le flotteur (16) débranche la pompe de vidange (33) lorsqu'il atteint la position de repos après avoir occupé auparavant la position de contact et que la vanne d'admission (32) est ensuite maintenue fermée.

3. Dispositif de sécurité suivant la revendication 1 ou 2, **caractérisé** par le fait que le flotteur (16), en position de repos, repose sur un appui (13) disposé sur le fond (12) de la chambre (11).

4. Dispositif de sécurité suivant l'une des revendications 1 à 3, **caractérisé** par le fait que le flotteur (16), en position de repos, repose sur un appui à trois points (14).

5. Dispositif de sécurité suivant l'une des revendications 1 à 4, **caractérisé** par le fait que la chambre (11) contenant le flotteur (16) est séparée dans l'espace du réservoir de liquide.

6. Dispositif de sécurité suivant l'une des revendications 1 à 5, **caractérisé** par le fait que la chambre (11) contenant le flotteur (16) se trouve en communication du point de vue liquide avec un canal de trop-plein (6) de l'appareil ménager utilisant de l'eau, canal dans lequel une restriction d'écoulement (6) est disposée dans le sens d'écoulement (7) en aval d'une ouverture (15) d'entrée d'eau dans la chambre (11).

7. Dispositif de sécurité suivant l'une des revendications 1 à 6, **caractérisé** par le fait que l'ouverture (15) d'entrée d'eau est protégée par un masque (20).

8. Dispositif de sécurité suivant l'une des revendications 1 à 7, **caractérisé** par le fait que le masque (20) est constitué par une paroi (21) disposée à distance de l'ouverture (15) de la chambre (11) et parallèlement au plan de celle-ci, paroi dont l'extrémité (22) inférieure dans le sens d'écoulement (7) se termine à distance (c) au-dessus de la paroi de la conduite de communication (1) avec le réservoir de liquide, et constitue ainsi la restriction d'écoulement (8).

9. Dispositif de sécurité suivant l'une des revendications 1 à 8, **caractérisé** par le fait que la chambre (11) se trouve en communication du point de vue liquide avec un réservoir de remplissage (5) de l'appareil ménager utilisant de l'eau.

10. Dispositif de sécurité suivant l'une des revendications 1 à 9, **caractérisé** par le fait que la chambre (11) se trouve en communication du point de vue liquide avec le canal de trop-plein (6) du réservoir de remplissage (5) de l'appareil ménager utilisant de l'eau, canal dans lequel la restriction d'écoulement (8) est disposée dans le sens d'écoulement (7) en aval de l'ouverture (15) d'entrée d'eau dans la chambre (11).

11. Dispositif de sécurité suivant l'une des revendications 1 à 10, **caractérisé** par le fait que la chambre (11) est disposée dans le réservoir de remplissage (5) de l'appareil ménager utilisant de l'eau.

12. Dispositif de sécurité suivant la revendication 11, **caractérisé** par le fait que la chambre (11) est formée d'une seule pièce dans le réservoir de remplissage (5).
